# EUROPEAN PATENT SPECIFICATION

(11) **EP 1 283 655 B1**
(45) Date of publication and mention of the grant of the patent: **08.09.2004**
(21) Application number: 02254379.7
(22) Date of filing: 24.06.2002
(51) Int. Cl.: H04Q 11/04

(54) **Maximizing DSL throughput with acceptable level of cross-talk**
Durchsatz-Maximierung einer DSL mit akzeptabelem Übersprechungsniveau
Maximalisation du débit d'une ligne DSL avec niveau de diaphonie acceptable

(30) Priority: 08.08.2001 US 924795
(43) Date of publication of application: 12.02.2003
(73) Proprietor: Lucent Technologies Inc., Murray Hill, New Jersey 07974-0636 (US)
(72) Inventor: Posthuma, Carl Robert, Wheaton, Illinois 60187 (US)
(74) Representative: Buckley, Christopher Simon Thirsk

(56) References cited:
- WO-A-00/35133
- WO-A-99/33215
- US-A- 5 673 290

## Description

### Technical Field:

This invention relates to transmission of signals over Digital Subscriber Lines.

### Problem:

Digital Subscriber Lines are becoming increasingly popular as a means of communicating between telephone subscribers and a central office switch. A Digital Subscriber Line is a twisted pair interconnecting a central office and customer premises equipment. While in the past, such lines have been restricted to carrying signals of no more than 4 KHZ, the normal voice band for telephone conversations, it has been found that these lines can in fact carry much higher frequencies, especially, if the signal that is being carried is a digital signal. However, even if digital signals are being carried, the inevitable limitations of cross-talk has an upper boundary for the bandwidth of digital signals that can be transmitted over a Digital Subscriber Line.

Standards have been established to limit the bandwidth for digital signals as a function of the number and type of Digital Subscriber Lines sharing a common binder group. A binder group is a group of line carriers which are bound together with a result that the cross-talk among the lines of a binder group is much higher than cross-talk from lines in other binder groups.

A problem of the prior art is that the limitations on bandwidth in Digital Subscriber Lines restricts the usefulness of such lines.

US-A-5 673 290 discloses arrangements for an improved Digital Subscriber Line (DSL), for carrying higher bit-rate traffic. The DSL has a controller for detecting cross-talk conditions, and for adjusting the bit rate of the controlled DSL to a maximum consistent with the detected cross-talk.

### Solution

Applicant has further studied this problem. The present limitation on the bit-rate allowed for any particular DSL is a function of the allowable bit-rates of the other DSL(s) in the same binder group, and of course, the length of the DSL. Clearly, however, a DSL which is not transmitting at any particular time, does not introduce cross-talk into an active DSL. Accordingly, Applicant has alleviated the problem in accordance with his invention, wherein the upper limit on the bit-rate of the DSL to correspond to the bit-rates of only the active DSL(s) in the same binder group. Advantageously, if most of the DSL(s) in a particular binder group are currently inactive, the bit-rate of a DSL can be substantially increased without incurring excessive cross-talk. Similarly, if most or all of the DSL(s) in a binder group are currently active, then the bit-rate is reduced, but the allowable cross-talk limits are not exceeded. Advantageously, the total DSL throughput through a binder group is dynamically adjusted for optimum performance.

In accordance with Applicant's invention, a processor of the switching system on which the DSL(s) of a binder group are terminated, monitors the allowable DSL throughput on each DSL of the binder group. Based on these numbers, the bit-rate of a newly active DSL can be calculated so that it will not exceed the limitation imposed by cross-talk characteristics. As DSL(s) become inactive, or as bit-rate requirements are reduced, the bit-rates of one or more of the other active DSL(s) can be increased, subject to the limitations of the binder group as a whole. Similarly, as each new DSL becomes active and requests a particular bit-rate, the bit-rate of other DSL(s) can be adjusted to accommodate as much as possible, of the requested bit-rate.

### Brief Description of the Drawing(s):

Figure 1 is a block diagram illustrating the operation of Applicant's invention; and
Figure 2 is a flow diagram illustrating the operation of the processor used to control DSL bit-rate limitations.

### Detailed Description:

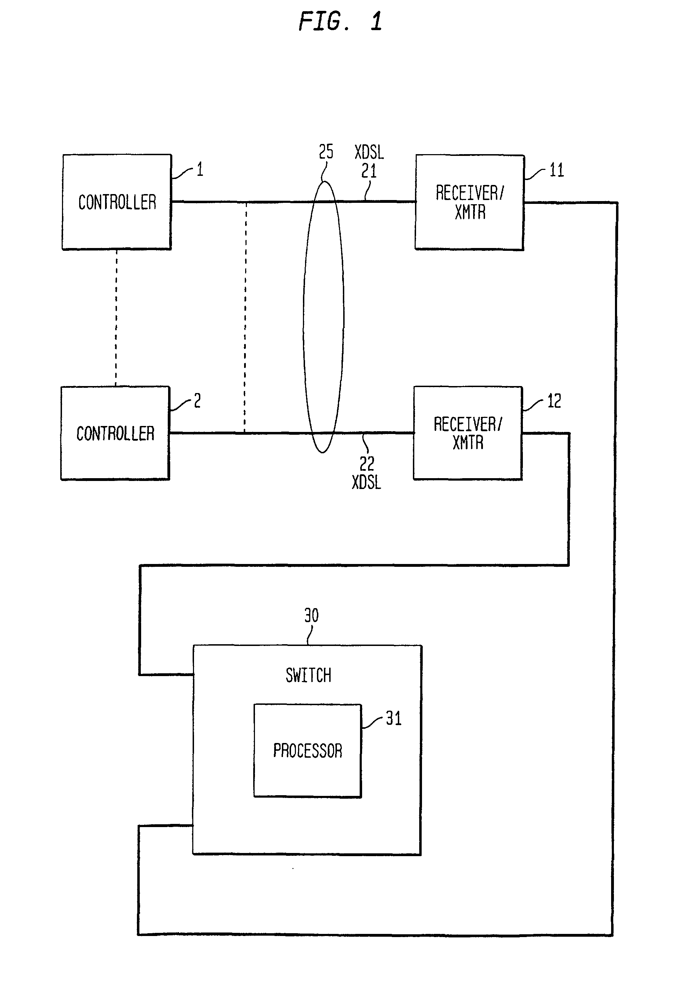

Figure 1 is a block diagram illustrating a plurality of Controllers at Customer Premises Equipment (CPE), and transceivers at a switch connected to the CPE. The two are connected by Digital Subscriber Lines. Specifically, Controllers **(1),** . . . , **(2)** are connected via DSL(s) **(21)**, . . . , **(22)**, to Transceivers **(11)**, . . . , **(12)**, in Switch **(30)**. DSL(s) **(21)**, . . . , **(22)** are in a single Binder Group **(25).** Processor **(31)** monitors the requested bit-rates of the various Controllers **(1)**, . . . , **(2)**, and adjusts these bit-rates downward if the requested bit-rates from all of the DSL(s) **(1)**, . . . , **(2)**, would cause excessive total binder cross-talk, hence, would be likely to exceed cross-talk limits on one or more individual DSL(s). The effect of different bit-rates from one DSL on another DSL communicating at different bit-rates can be established experimentally, or by modeling and simulation. The allowable cross-talk can also be established experimentally by determining the cross-talk power which will cause excessive error rates. Then, the cross-talk contributions of each active DSL can be established as a function of the bit-rate of that DSL, and the sum of the cross-talk contributions of all active DSL(s) can be subject to a limitation; if this limitation is exceeded, the bit-rate of selected ones of the DSL(s) can be reduced until the total cross-talk power meets requirements.

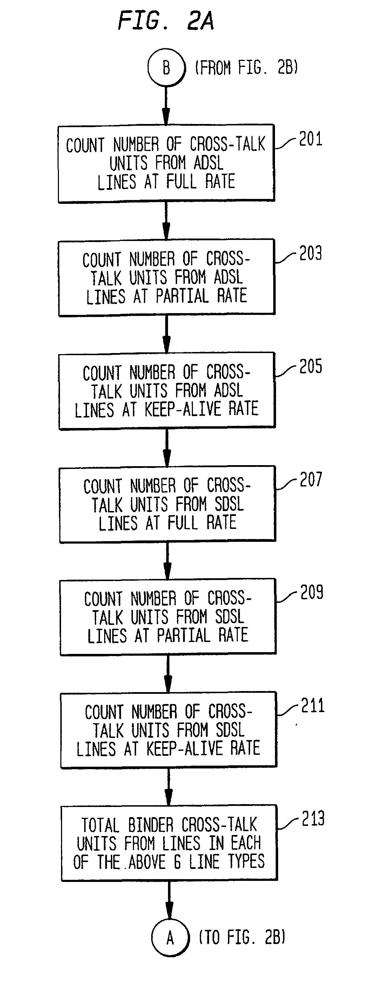

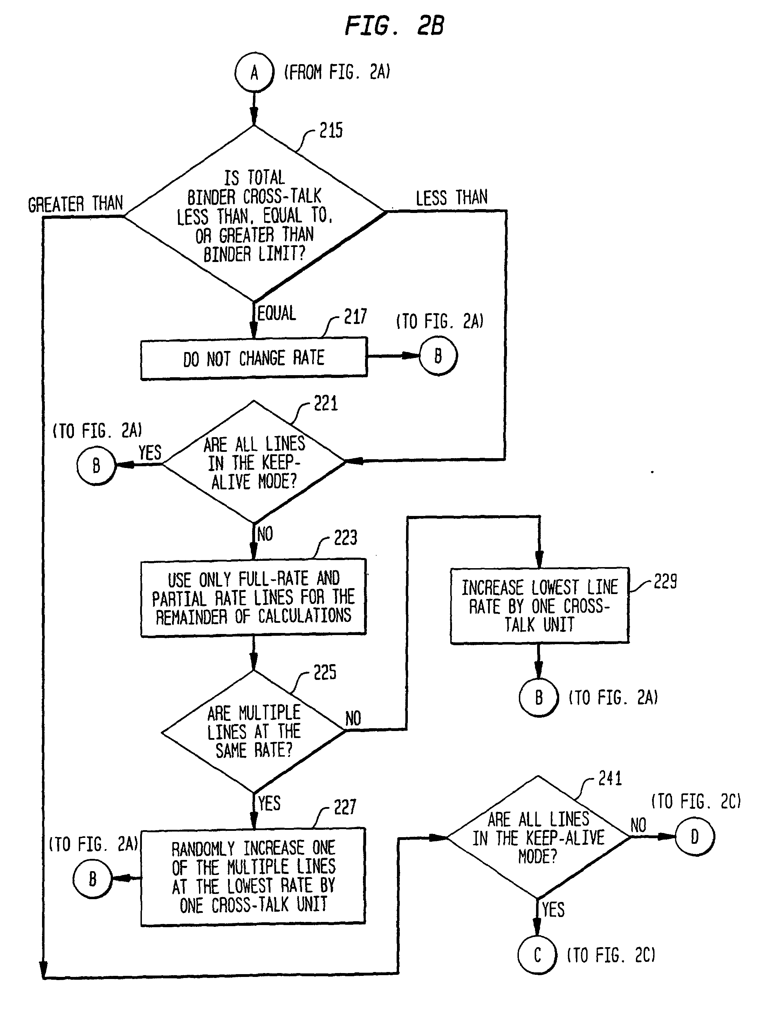

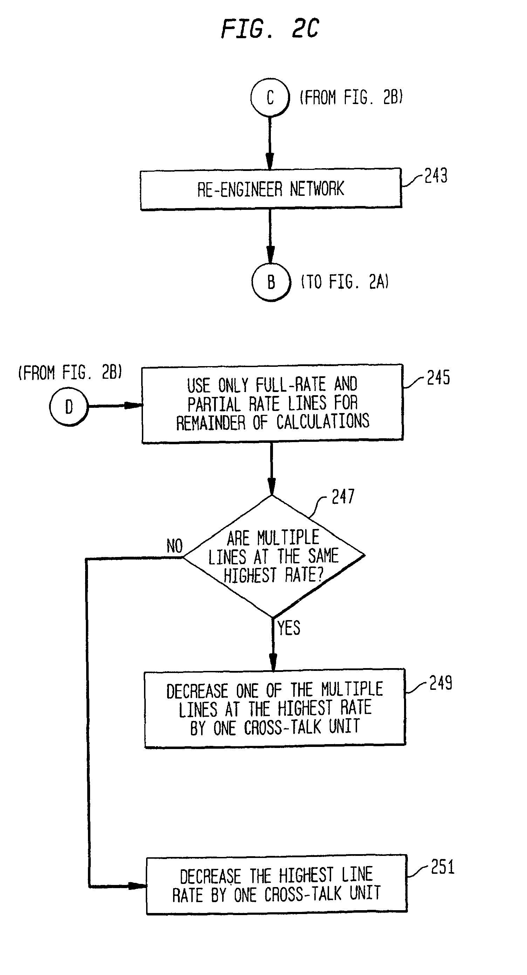

Figure 2 is a flow diagram illustrating the operations of Applicant's invention. In this simplified example, a number of assumptions are made:
1. All loops are of equal length.
2. All loops stay in the same binder.
3. Cross-talk effects from outside binders are negligible (except as discussed hereinafter).

The objective in this example is to set a maximum bit-rate for each active loop that is approximately the same for all of these loops. Exceptions could be made by having special high priority loops which always receive the bandwidth allotment which they request, and by allowing loops to request less than the allowed maximum. For loops which request less than the allowed maximum, the transmission rate is not lowered until all or most of the active loops have a transmission rate at or below the requested transmission rate for the loop under consideration.

Figure 2 is a flow diagram of a program loop used to monitor and adjust the transmission rate of each loop. The cross-talk from each active, or keep-alive loop is expressed in cross-talk units. It is assumed that the number of cross-talk units is directly proportional to the allowable transmission rate for each DSL line. In Action Block **(201)**, the number of cross-talk units from ADSL lines operating at full rate is accumulated. Next, the number of cross-talk units from ADSL lines operating at a rate other than the full rate, but at a higher rate than a keep-alive rate, is accumulated, Action Block **(203)**. Next, the number of cross-talk units from ADSL lines in the keep-alive mode is accumulated, Action Block **(205)**. Next, the number of cross-talk units from SDSL lines operating at full rate is accumulated, Action Block **(207)**. Next, the number of cross-talk units from SDSL lines operating at a rate other than the full rate, but at a higher rate than the keep-alive rate, is accumulated, Action Block **(209).** Finally, the number of cross-talk units from SDSL lines in the keep-alive rate is accumulated, Action Block **(211)**. In Action Block **(213)**, the sum of these (6) accumulated cross-talk units is calculated, Action Block (213).

Test **(215)** is used to determine whether the total number of cross-talk units is equal to, greater than, or less than the limit for that binder. In order to allow lines which are inactive to become active, and to do so quickly, this limit should be lower than a true upper limit for the binder by several (say 1 - 4), full-rate cross-talk units. Then, when a line becomes active, the limit of Test **(215)** is temporarily exceeded, but through repeated traversal of the program route, eventually goes back to that limit.

If the total binder cross-talk is equal to the limit, then Action Block **(217)**, ("don't change") is entered, and the loop is re-entered by a transfer to Action Block **(201)**.

If the binder cross-talk is less than the binder limit, then Test **(221)** is used to determine whether all active lines are in the keep-alive mode. If so, then Action Block **(217)**, previously described is entered, since there is no need under these circumstances to raise a transmission rate of any active line. Action Block **(223)** indicates that only full-rate and partial rate lines should be considered for the calculations of Action Blocks **(225), (227),** and **(229)**. Test **(225)** is used to determine whether more than one of the lines is currently transmitting at the lowest rate of active lines. For Test **(225),** lines which have requested a bit-rate less than the maximum are not considered unless these lines are transmitting at the same rate as active lines which have requested transmission at the highest rate. If the result of Test **(225)** indicates that there are several lines transmitting at the lowest rate, then one of these lines has as its allowable transmission rate increased by one unit, or by multiple units to decrease convergence time, and the line is selected randomly, Action Block **(227)**. (One cross-talk unit may be, for example, 1% of the total cross-talk at the maximum transmission rate of a DSL line). If only one line is transmitting at the lowest rate, then that line has its allowable transmission rate increased by one cross-talk unit or by multiple units, Action Block **(229)**. Following execution of Action Block **(227)** or **(229)**, Action Block **(201)**, (the beginning of the loop), is re-entered.

The loop is executed frequently in order to ensure that a large increment of cross-talk is detected before it has a chance to cause an unacceptable error rate. If a large jump is detected, the number of cross-talk units can be decreased by multiple units in each iteration of the loop.

If the result of Test **(215)** indicates that the total binder cross-talk limit has been exceeded, then Test **(241)** is used to determine whether all of the lines are in the keep-alive mode. If all lines are in the keep-alive mode, the limit clearly must be re-engineered, since the present limit will not even allow all, or fewer than all, of the lines in the binder to be in the keep-alive mode, Action Block **(243)**.

If all of the active lines are not in the keep-alive mode, then Action Block **(245)** indicates that bit-rate for Blocks **(247)**, **(249)**, and **(251)**, (only full-rate and active partial rate lines, excluding those lines which are already transmitting at their maximum requested rate), should be considered. Test **(247)** is used to determine whether one, or more than one line is transmitting at the same highest rate of this group. If more than one line is transmitting at this highest rate, then one of the lines transmitting at that highest rate is randomly selected, and its transmission rate is reduced by one cross-talk unit, or by multiple units to decrease convergence time, Action Block **(249)**. If only one line is transmitting at this maximum rate of those examined in Test **(247)**, then that line has its transmission rate decreased by one cross-talk unit, or by multiple units. Following execution of Action Block **(249)** or **(251)**, the start of the loop, Action Block **(201)**, is re-entered.

While this discussion has been in terms of DSL(s) in a single binder group, the principles can be extended to multiple binder groups. The upper limit of single binder cross-talk units can be modified by the cross-talk units of surrounding binder groups, so that the upper limit would be less if these other units are at the upper end of their cross-talk unit range, and higher, if these surrounding binder groups are substantially below this upper end of their crosstalk limits.

The above description is of one preferred embodiment of Applicant's invention. Other embodiments will be apparent to those of ordinary skill in the art. The invention is limited only by the attached Claims.

## Claims

1. Apparatus for adjusting the maximum bit-rate of a Digital Subscriber Line (21, 22), comprising:
controllers (1, 2) for each Digital Subscriber Line (DSL) for limiting the bit-rate for a corresponding DSL;
**characterized in that**
each of said controllers comprises means for requesting, from a centralized processor means (31), a bit-rate for a DSL controlled by said controller,
said processor means for monitoring, storing and analyzing the requested bit-rates for all of the active DSLs in a binder group (25);
said processor means programmed (201-215) to detect if bit-rates for all of the DSLs in said binder group correspond to an unacceptable level of cross-talk;
responsive to detection of bit-rates corresponding to an unacceptable level of cross-talk, said processor means further programmed (245, 247, 249, 251) to reduce the bit-rate of one or more of the active DSLs of said binder group to lower the cross-talk level to an acceptable level of cross-talk.

2. The apparatus of Claim 1, wherein if said acceptable level of cross-talk is above a present detected level, said processor means is programmed (227, 229) to permit a line to increase its bit-rate without increasing the cross-talk level to an unacceptable level of cross-talk.

3. The apparatus of Claim 2, wherein if bit-rates for all of the DSLs in said binder group correspond to a cross-talk level above an acceptable upper limit of cross-talk, said processor means programmed (249, 251) to reduce the bit-rate of one or more active DSLs of said binder group.

4. The apparatus of Claim 1, wherein if said processor means detects bit-rates for all of the DSLs in said binder group corresponding to a cross-talk level below an acceptable upper limit of cross-talk, said processor means is further programmed (227, 229) to increase the bit-rate of one or more active DSLs in said binder group towards bit-rates corresponding to said acceptable upper limit said of cross-talk.

5. The apparatus of Claim 1, wherein an acceptable upper limit of cross-talk is adjusted upward if surrounding binder groups have a level of cross-talk below their acceptable upper limit of cross-talk.

6. The apparatus of Claim 1, wherein said processor means is further programmed to perform the detection step (201-215) at intervals sufficiently frequent to minimize the probability of exceeding an acceptable upper limit of cross-talk.

## Patentansprüche

1. Vorrichtung zum Einstellen der maximalen Bitrate eines digitalen Teilnehmeranschlusses (21, 22) mit folgendem:
Steuerungen (1, 2) für jeden digitalen Teilnehmeranschluß (DSL - Digital Subscriber Line) zum Begrenzen der Bitrate für einen entsprechenden DSL;
**dadurch gekennzeichnet, daß**
jede dieser Steuerungen Mittel zum Anfordern von einem zentralen Prozessormittel (31) einer Bitrate für einen DSL unter Steuerung durch diese Steuerung umfaßt,
das Prozessormittel zum Überwachen, Speichern und Auswerten der angeforderten Bitraten für alle aktiven DSL in einer Bindergruppe (25) dient;
wobei das Prozessormittel programmiert (201-215) ist, zu erkennen, ob Bitraten für alle DSL in dieser Bindergruppe einem unannehmbaren Pegel von Nebensprechen entsprechen;
als Reaktion auf die Erkennung von einem unannehmbaren Pegel von Nebensprechen entsprechenden Bitraten, das Prozessormittel weiterhin
programmiert (245, 247, 249, 251) ist, die Bitrate eines oder mehrerer der aktiven DSL der Bindergruppe zu verringern, um den Nebensprechpegel auf einen annehmbaren Pegel von Nebensprechen herabzusetzen.

2. Vorrichtung nach Anspruch 1, wobei, wenn der annehmbare Pegel von Nebensprechen über einem gegenwärtig erkannten Pegel liegt, das Prozessormittel programmiert (227, 229) ist, einem Anschluß zu erlauben, seine Bitrate zu erhöhen, ohne den Nebensprechpegel auf einen unannehmbaren Pegel von Nebensprechen zu steigern.

3. Vorrichtung nach Anspruch 2, wobei, wenn Bitraten für alle DSL in der Bindergruppe einem Nebensprechpegel über einer annehmbaren Obergrenze von Nebensprechen entsprechen, das Prozessormittel programmiert (249, 251) ist, die Bitrate eines oder mehrerer aktiver DSL dieser Bindergruppe herabzusetzen.

4. Vorrichtung nach Anspruch 1, wobei, wenn das Prozessormittel Bitraten für alle DSL in der Bindergruppe erkennt, die einem Nebensprechpegel unter einer annehmbaren Obergrenze von Nebensprechen entsprechen, das Prozessormittel weiterhin programmiert (227, 229) ist, die Bitrate eines oder mehrerer aktiver DSL in der Bindergruppe zu einer, einer annehmbaren Obergrenze von Nebensprechen entsprechenden Bitrate hin zu erhöhen.

5. Vorrichtung nach Anspruch 1, wobei eine annehmbare Obergrenze von Nebensprechen nach oben verstellt wird, wenn umgebende Bindergruppen einen Nebensprechpegel unterhalb ihrer annehmbaren Obergrenze von Nebensprechen aufweisen.

6. Vorrichtung nach Anspruch 1, wobei das Prozessormittel weiterhin programmiert ist, den Erkennungsschritt (201-215) in Intervallen durchzuführen, die häufig genug auftreten, um die Wahrscheinlichkeit des Überschreitens einer annehmbaren Obergrenze von Nebensprechen zu minimieren.

## Revendications

1. Dispositif pour régler le débit binaire maximum d'une Ligne d'Abonné numérique (21, 22), comprenant :
des contrôleurs (1, 2) pour chaque Ligne d'Abonné numérique (DSL) pour limiter le débit binaire d'une DSL correspondante ;
**caractérisé en ce que**
chacun desdits contrôleurs comprend un moyen pour demander, à un moyen de traitement centralisé (31), un débit binaire pour une DSL commandée par le contrôleur,
ledit moyen de traitement pour surveiller, mémoriser et analyser les débits binaires demandés pour toutes les DSL actives dans un faisceau de paires (25) ;
ledit moyen de traitement programmé (201 à 215) pour détecter si des débits binaires pour toutes les DSL dans ledit faisceau de paires correspondent à un niveau inacceptable de diaphonie ;
en réponse à la détection de débits binaires correspondant à un niveau inacceptable de diaphonie, ledit moyen de traitement étant programmé en outre (245, 247, 249, 251) pour réduire le débit binaire d'une ou de plusieurs DSL actives dudit faisceau de paires afin de réduire le niveau de diaphonie à un niveau acceptable de diaphonie.

2. Dispositif selon la revendication 1, dans lequel si ledit niveau acceptable de diaphonie est supérieur à un niveau détecté présent, ledit moyen de traitement est programmé (227, 229) pour permettre à une ligne d'augmenter son débit binaire sans augmenter le niveau de diaphonie à un niveau inacceptable de diaphonie.

3. Dispositif selon la revendication 2, dans lequel si des débits binaires pour toutes les DSL dans ledit faisceau de paires correspondent à un niveau de diaphonie supérieur à une limite supérieure acceptable de diaphonie, ledit moyen de traitement est programmé (249, 251) pour réduire le débit binaire d'une ou de plusieurs DSL actives dudit faisceau de paires.

4. Dispositif selon la revendication 1, dans lequel si ledit moyen de traitement détecte des débits binaires pour toutes les DSL dans ledit faisceau de paires correspondent à un niveau de diaphonie inférieur à une limite supérieure acceptable de diaphonie, ledit moyen de traitement est en outre programmé (227, 229) pour augmenter le débit binaire d'une ou de plusieurs DSL actives dans ledit faisceau de paires vers des débits binaires correspondant à ladite limite supérieure acceptable de diaphonie.

5. Dispositif selon la revendication 1, dans lequel une limite supérieure acceptable de diaphonie est réglée vers le haut si des faisceaux de paires voisins ont un niveau de diaphonie inférieur à leur limite supérieure acceptable de diaphonie.

6. Dispositif selon la revendication 1, dans lequel ledit moyen de traitement est en outre programmé pour exécuter l'étape de détection (201 à 215) à des intervalles suffisamment fréquents pour minimiser la probabilité de dépassement d'une limite supérieure acceptable de diaphonie.
